# EUROPEAN PATENT APPLICATION

(11) **EP 4 144 708 A1**
(43) Date of publication of application: **08.03.2023**
(21) Application number: 21194931.8
(22) Date of filing: 03.09.2021
(51) Int. Cl.: C04B 28/04, C04B 28/06, C04B 40/00

(54) **ADMIXTURE TO CONTROL THE HEAT FLOW FROM MINERAL BINDER COMPOSITIONS, MINERAL BINDER COMPOSITIONS, AND PRODUCTION METHOD THEREOF**

(71) Applicant: Sika Technology AG, 6340 Baar (CH)
(72) Inventor: Eberhardt, Arnd, 8400 Winterthur (CH); Müller, Thomas, Sandhausen 69207 (DE); Unseld, Johannes, 38678 Clausthal-Zellerfeld (DE); Frunz, Lukas, 8305 Dietlikon (CH); Gallucci, Emmanuel, 8048 Zürich (CH); Juilland, Patrick, 3005 Bern (CH); Schönenberger, Denise, 8483 Kollbrunn (CH); Pegado, Luis, 5200 Brugg (CH)
(74) Representative: Sika Patent Attorneys

(57) **Abstract**

The present invention relates to an admixture for mineral binder compositions, especially for concrete, said admixture comprising or consisting of
a) at least one kinetic regulator selected from esters of hydroxy carboxylic acid, especially citric acid esters, tartaric acid esters, lactic acid esters, gluconic acid esters, malic acid esters, glycolic acid esters, and/or mandelic acid esters,
b) optionally an accelerator for the hydration of cement, and
c) optionally water.

Admixtures of the present invention reduce the maximum heat flow from mineral binder composition, especially concrete, without unduly retarding setting and/or curing thereof.

## Description

### Technical Field

The present invention relates to the field of admixtures for mineral binder compositions, especially for concrete. Admixtures of the present invention reduce the maximum heat flow from mineral binder composition, especially concrete, without unduly retarding setting and/or curing thereof.

### Background of the invention

It is a well-known phenomenon that cementitious materials develop and release heat upon hydration. Especially the hydration reaction of cement is exothermic and a considerable amount of energy, often called the heat of hydration, is released upon hydration of cement. Especially during the production of mass concrete this heat of hydration can be problematic.

Mass concrete refers to very thick structures of concrete, typically with a thickness of more than 80 cm. Such structures often have a large volume and generally a large amount of concrete has to be installed in short time to produce such structures. During placement of mass concrete a typical phenomenon is a significant temperature difference between internal and external layers of concrete during setting and curing. This temperature difference being due to the transportation and dissipation of the heat of hydration from concrete internal layers via outer layers and surfaces to the surroundings. Also, very high concrete core temperatures can be encountered, such as higher than 60°C or higher than 80 °C, which may lead to formation of metastable hydrate phases. As a consequence, mass concrete has an increased risk of cracking and strength development can be less predictable and sometimes lower than expected. Cracked mass concrete has a lower durability and sometimes cracks may even lead to structural failure.

Current measures to counteract this problem include the use of special cements with low heat development, cooling of aggregates, placement of the concrete in several subsequent layers, curing with thermal insulation, active cooling, and design of joints and sections to facilitate heat dissipation. All of these measures require additional steps which can be difficult to realize on a job site and which increase the complexity and cost of a given project considerably.

Retarders for the hydration reaction of cementitious materials are known. However, such retarders typically either inhibit the hydration reaction at least for some time or they slow down the hydration reaction. Inhibition typically does not balance the heat release and when hydration finally starts, the full heat of hydration is released. A slowdown of the hydration reactions balances the release of the heat of hydration over a longer time, but also prolongs the time until which a desired degree of curing, often a desired strength, is reached and thus may slow down the whole construction process.

What is needed is a kinetic regulator for cementitious materials that can control or balance the heat release over the time of curing. Ideally, such a kinetic regulator does not inhibit the start of cement hydration significantly. Additionally, such a kinetic regulator does not unduly prolong the curing of cementitious materials. Such kinetic regulators will be very useful to avoid elevated temperatures in the core of thick cementitious materials, e.g. mass concrete and/or to also avoid temperature differences between internal and external layers of thick cementitious materials, e.g. mass concrete.

### Summary of the invention

It is an object of the present invention to provide an admixture for mineral binder compositions, especially concrete, which can control or balance the heat release over the time of curing. Preferably, such an admixture prolongs the start of cement hydration only to an extent that is acceptable for practical applications. Further preferably, such an admixture does not unduly prolong the curing of cementitious materials. It is a further object of the present invention to provide a mineral binder composition, especially a concrete, comprising such admixture. It is a still further object of the present invention to provide processes for the production of cementitious materials, especially concrete, having a controlled or balanced heat release over the time of curing.

Surprisingly, the objectives could be solved by an admixture, a mineral binder composition, and a process of manufacturing a mineral binder composition as claimed in the independent claims.

It was found that a kinetic regulator selected from esters of hydroxy carboxylic acid, especially citric acid esters, tartaric acid esters, lactic acid esters, gluconic acid esters, malic acid esters, glycolic acid esters, and/or mandelic acid esters can control or balance the heat release over the time of curing of mineral binder compositions, especially of concrete. Thereby, for example, the peak in heat flow, or maximum heat flow, from a cementitious composition comprising said kinetic regulator can be reduced by between 10 ― 90 % as compared to the same cementitious composition without said kinetic regulator.

It was also found that, for example, the concrete core temperature measured after casting of a concrete comprising a kinetic regulator of the present invention was reduced by up to 40 % as compared to the same cast concrete without said kinetic regulator.

Advantageous embodiments of the present invention are the subject matter of dependent claims.

### Ways for carrying out the invention

Within the present context the term "comprising" describes a composition having at least the ingredients listed and additionally may have any further ingredients. The term "comprising" thus is not meant to limit a composition to the ingredients listed. On the other hand, the term "consisting of" means that a composition is limited to having only the ingredients listed and no further essential ingredients. A composition consisting of the listed ingredients may only have other ingredients that are completely unessential for the functioning of said composition.

In a first aspect the present invention relates to an admixture for mineral binder compositions said admixture comprising or consisting of
a) at least one kinetic regulator selected from esters of hydroxy carboxylic acid,
b) optionally an accelerator for the hydration of cement, and
c) optionally water.

A hydroxy carboxylic acid within the present context is an organic molecule comprising at least one carboxylic acid group and at least one hydroxy group. Preferred esters of hydroxy carboxylic acid are selected from citric acid esters, tartaric acid esters, lactic acid esters, gluconic acid esters, malic acid esters, glycolic acid esters, and/or mandelic acid esters.

A mineral binder composition within the present context is a composition comprising at least one mineral binder. A mineral binder composition may also consist of at least one mineral binder.

Within the present context, a mineral binder is a binder able to
a) react in a hydraulic reaction with water to form hydrate phases, or
b) able to react with atmospheric gases, especially with carbon dioxide, to form hard, solid phases, or
c) able to form hard, solid phases by drying.

Preferably, a mineral binder is selected from cement, lime, magnesia, alumina, latent hydraulic binders, and/or pozzolanes, especially preferably from cement. Preferably, a mineral binder within the present context is a hydraulic binder.

Cements can in particular be Portland cements of type CEM I, CEM II, CEM III, CEM IV, and CEM V as described in standard EN 197-1, Portland cement of type CEM VI as described in standard DIN EN 197-5, calcium aluminate cements as described in standard EN 14647, and/or calcium sulphoaluminate cements. Cements according to other standards, for example Portland cement according to standard ASTM C140-05, or cements according to Chinese, Japanese, Indian or other standards are likewise encompassed. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolane such as pumice, trass, and finely ground limestone.

According to embodiments, the at least one mineral binder comprises or essentially consists of Portland cement of any of the types mentioned above. Especially, the mineral binder comprises at least 5 w%, preferably at least 20 w%, more preferably at least 35 w%, still more preferably at least 65 w%, especially at least 80 w%, in particular at least 95 w% of Ordinary Portland Cement (OPC).

Calcium sulfate (CaSO₄), for example in form of gypsum, may be present in the mineral binder, for example as part of the cement. However, the mineral binder may not consist of calcium sulfate.

A mineral binder composition of the present invention preferably comprises at least 10 w%, preferably at least 25 w%, more preferably at least 33 w%, still more preferably at least 66 w%, still more preferably at least 80 w%, in particular at least 90 w%, especially at least 99 w%, relative to the total dry weight of the mineral binder composition, of a mineral binder.

The mineral binder composition may additionally comprise aggregates, further additives, and/or water. Aggregates and further additives are as described below.

According to embodiments of the present invention, a mineral binder composition is a concrete or a mortar or a cement, especially a concrete. According to preferred embodiments, the mineral binder composition is a concrete comprising Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05.

The kinetic regulator is selected from esters of hydroxy carboxylic acid. Especially preferred, the at least one kinetic regulator is selected from citric acid esters, tartaric acid esters, lactic acid esters, gluconic acid esters, malic acid esters, glycolic acid esters, and/or mandelic acid esters.

According to embodiments, the kinetic regulator is a citric acid ester. Especially, the kinetic regulator is an ester of citric acid with a polyhydric alcohol. Further preferred are mixed esters of citric acid and fatty acids with polyhydric alcohols.

Citric acid within the present context is meant to also encompass isocitric acid.

According to embodiments, the kinetic regulator is an ester of citric acid according to the following general structure (I) 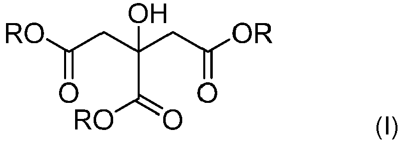 where each R, independently of one another, is H, or a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms, with the provision that at least one of R is not H.

It has been found that kinetic regulators of the general structure (I) and with at least one hydrophobic moiety R, are particularly suitable within the present context. Suitable kinetic regulators of the general structure (I) are monobutyl citrate, dibutyl citrate, tributyl citrate, monopentyl citrate, dipentyl citrate, tripentyl citrate, monohexyl citrate, dihexyl citrate, trihexyl citrate, monooleyl citrate, dioleyl citrate, trioleyl citrate, monostearyl citrate, distearyl citrate, tristearyl citrate, monolauryl citrate, dilauryl citrate, trilauryl citrate, monoprenyl citrate, diprenyl citrate, triprenyl citrate, monocyclohexyl citrate, dicyclohexyl citrate, tricyclohexyl citrate, monophenyl citrate, diphenyl citrate, triphenyl citrate.

According to further embodiments, the kinetic regulator is an ester of citric acid with a polyhydric alcohol. Such esters have of the following general structure (II): 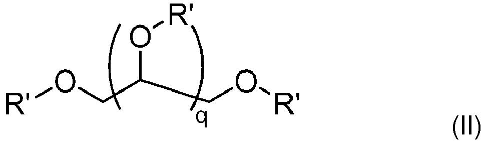 where q is an integer between 0 ― 4, preferably 1 or 2, and
R' independently of one another are H, or C(O)-R"", or a moiety of general structure (III), with the provision that at least one of R' is a moiety of general structure (III), where R"" is an unbranched C2 ― C30 alkyl chain or an unbranched C2 ― C30 alkenyl chain, wherein the alkenyl chain may comprise between 1 ― 6 double bonds, and where the general structure (III) is: 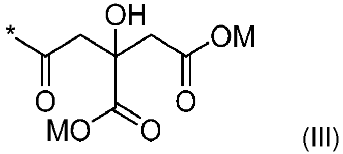 where each M independently of one another is H or an alkali metal or alkaline earth metal ion.

Suitable kinetic regulators of the general structure (II) are esters of citric acid with ethylene glycol, glycerol, or erythritol. Such esters can be mono-, di- or tri-esters of citric acid. Such esters can be monomeric, oligomeric, or polymeric.

It is possible within the present context, that the esters of citric acid with a polyhydric alcohol comprise additional ester groups formed with acids different from citric acid. Such acids especially are acetic acid, propionic acid, and fatty acids. Suitable kinetic regulators of the general structure (II) thus also include co-esters of ethylene glycol, glycerol, or erythritol with citric acid and at least one of acetic acid, propionic acid, and fatty acids.

According to especially preferred embodiments, the kinetic regulator is selected from mono- and/or diglycerides of citric acid. Mono- and/or diglycerides of citric acid have a chemical structure of the following general formula (IV). Accordingly, according to preferred embodiments, the kinetic regulator of the present invention has the general structure (IV): 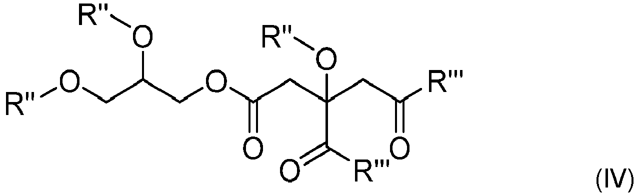 wherein
each R", independently of one another, is H or C(O)-R"", with the provision that at least one R" is not H,
where R"" is an unbranched C2 ― C30 alkyl chain or an unbranched C2 ― C30 alkenyl chain, wherein the alkenyl chain may comprise between 1 ― 6 double bonds, and
each R"' independently of one another is OM with M being H or an alkali metal or alkaline earth metal ion, or a moiety of the following general structure (V), 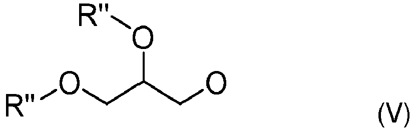 wherein
   each R", independently of one another, is H or C(O)-R"" with R"" being an unbranched C2 ― C30 alkyl chain or an unbranched C2 ― C30 alkenyl chain, wherein the alkenyl chain may comprise between 1 ― 6 double bonds.

The kinetic regulator of the present invention can be a monoglyceride of citric acid or a mixture of different monoglycerides of citric acid. The kinetic regulator of the present invention can be a diglyceride of citric acid or a mixture of different diglycerides of citric acid. The kinetic regulator of the present invention can also be a mixture of one or more monoglycerides and one or more diglycerides of citric acid. It is preferred that the kinetic regulator of the present invention is a mixture of mono- and diglycerides of citric acid.

Such mono- and/or diglycerides of citric acid are also known as Citrem. They are commercially available and commonly used in the food industry.

Moieties C(O)-R"" in the above general structures (IV) and (V) preferably are derived from fatty acids. Preferred fatty acids to be present as esters in general structures (IV) and (V) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a tartaric acid ester. Especially, the kinetic regulator is an ester of tartaric acid with a polyhydric alcohol. Further preferred are mixed esters of tartaric acid and fatty acids with polyhydric alcohols.

According to embodiments, the kinetic regulator is an ester of tartaric acid according to the following general structure (VI) 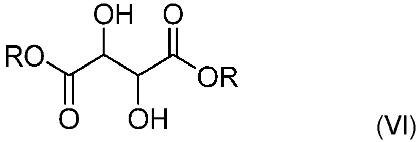 where each R, independently of one another, is H, or a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms, with the provision that at least one of R is not H.

It has been found that kinetic regulators of the general structure (VI) and with at least one hydrophobic moiety R, are particularly suitable within the present context. Suitable kinetic regulators of the general structure (VI) are monobutyl tartrate, dibutyl tartrate, monopentyl tartrate, dipentyl tartrate, monohexyl tartrate, dihexyl tartrate, monooleyl tartrate, dioleyl tartrate, monostearyl tartrate, distearyl tartrate, monolauryl tartrate, dilauryl tartrate, monoprenyl tartrate, diprenyl tartrate, monocyclohexyl tartrate, dicyclohexyl tartrate, monophenyl tartrate, diphenyl tartrate.

According to further embodiments, the kinetic regulator is an ester of tartaric acid with a polyhydric alcohol. Such esters have of the following general structure (VII): 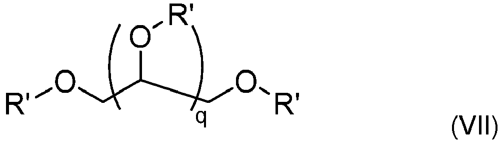 where q is an integer between 0 ― 4, preferably 1 or 2, and
R′ independently of one another are H, or C(O)-R"", or a moiety of general structure (VIII), with the provision that at least one of R' is a moiety of general structure (VIII), where R"" is an unbranched C2 ― C30 alkyl chain or an unbranched C2 ― C30 alkenyl chain, wherein the alkenyl chain may comprise between 1 ― 6 double bonds, and where the general structure (VIII) is: 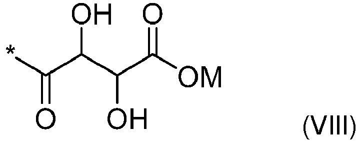 where each M independently of one another is H, or an alkali metal, or alkaline earth metal ion.

Suitable kinetic regulators of the general structure (VII) are esters of tartaric acid with ethylene glycol, glycerol, or erythritol. Such esters can be mono-, or di-esters of tartaric acid. Such esters can be monomeric, oligomeric, or polymeric.

It is possible within the present context, that the esters of tartaric acid with a polyhydric alcohol comprise additional ester groups formed with acids different from tartaric acid. Such acids especially are acetic acid, propionic acid, and fatty acids. Suitable kinetic regulators of the general structure (VII) thus also include co-esters of ethylene glycol, glycerol, or erythritol with tartaric acid and at least one of acetic acid, propionic acid, and fatty acids.

According to especially preferred embodiments, the kinetic regulator is selected from mono- and/or diglycerides of tartaric acid. Mono- and/or diglycerides of tartaric acid have a chemical structure of the following general formula (IX). Accordingly, according to preferred embodiments, the kinetic regulator of the present invention has the general structure (IX): 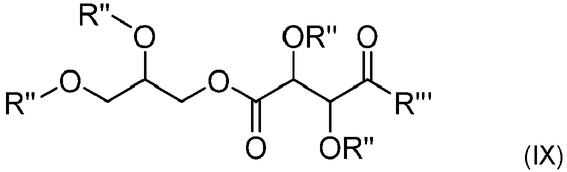 wherein
each R", independently of one another, is H or C(O)-R"", with the provision that at least one R" is not H,
where R"" being an unbranched C2 ― C30 alkyl chain or an unbranched C2 ― C30 alkenyl chain, wherein the alkenyl chain may comprise between 1 ― 6 double bonds, and
each R"' independently of one another is OM with M being H or an alkali metal or alkaline earth metal ion, or a moiety of the following general structure (X), 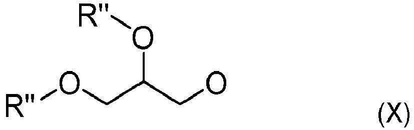 wherein
   each R", independently of one another, is H or C(O)-R"" with R"" being an unbranched C2 ― C30 alkyl chain or an unbranched C2 ― C30 alkenyl chain, wherein the alkenyl chain may comprise between 1 ― 6 double bonds.

The kinetic regulator of the present invention can be a monoglyceride of tartaric acid or a mixture of different monoglycerides of tartaric acid. The kinetic regulator of the present invention can be a diglyceride of tartaric acid or a mixture of different diglycerides of tartaric acid. The kinetic regulator of the present invention can also be a mixture of one or more monoglycerides and one or more diglycerides of tartaric acid. It is preferred that the kinetic regulator of the present invention is a mixture of mono- and diglycerides of tartaric acid.

Moieties C(O)-R"" in the above general structures (IX) and (X) preferably are derived from fatty acids. Preferred fatty acids to be present as esters in general structures (IX) and (X) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

Examples of preferred kinetic regulators are diacetylated mono- and diglycerides of tartaric acid.

According to embodiments, the kinetic regulator is a lactic acid ester. Especially, the kinetic regulator is an ester of lactic acid with a polyhydric alcohol. Further preferred are mixed esters of lactic acid and fatty acids with polyhydric alcohols.

According to embodiments, the kinetic regulator is an ester of lactic acid according to the following general structure (XI) 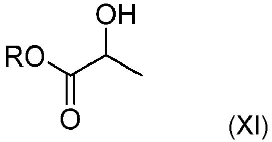 where R is a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms.

Suitable kinetic regulators of the general structure (XI) are butyl lactate, pentyl lactate, hexyl lactate, oleyl lactate, stearyl lactate, lauryl lactate, prenyl lactate, cyclohexyl lactate, phenyl lactate.

According to further embodiments, the kinetic regulator is an ester of lactic acid with a polyhydric alcohol. Such esters have of the following general structure (XII): 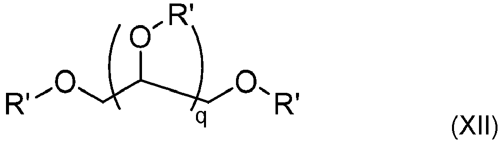 where q is an integer between 0 ― 4, preferably 1 or 2, and
R' independently of one another are H, or C(O)-R"", or a moiety of general structure (XIII), with the provision that at least one of R' is a moiety of general structure (XIII), where R"" is an unbranched C2 ― C30 alkyl chain or an unbranched C2 ― C30 alkenyl chain, wherein the alkenyl chain may comprise between 1 ― 6 double bonds, and where the general structure (XIII) is:

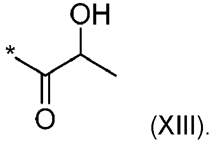

Suitable kinetic regulators of the general structure (XII) are esters of lactic acid with ethylene glycol, glycerol, or erythritol.

It is possible within the present context, that the esters of lactic acid with a polyhydric alcohol comprise additional ester groups formed with acids different from lactic acid. Such acids especially are acetic acid, propionic acid, and fatty acids. Suitable kinetic regulators of the general structure (XII) thus also include co-esters of ethylene glycol, glycerol, or erythritol with lactic acid and at least one of acetic acid, propionic acid, and fatty acids.

According to especially preferred embodiments, the kinetic regulator is selected from monoglycerides of lactic acid. Monoglycerides of lactic acid have a chemical structure of the following general formula (XIV). Accordingly, according to preferred embodiments, the kinetic regulator of the present invention has the general structure (XIV): 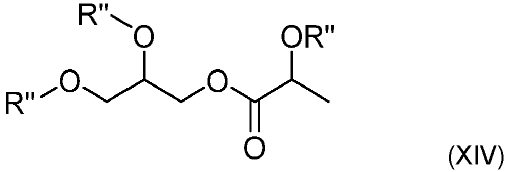 wherein
each R", independently of one another, is H or C(O)-R"", with the provision that at least one R" is not H,
where R"" being an unbranched C2 ― C30 alkyl chain or an unbranched C2 ― C30 alkenyl chain, wherein the alkenyl chain may comprise between 1 ― 6 double bonds.

The kinetic regulator of the present invention can be a monoglyceride of lactic acid or a mixture of different monoglycerides of lactic acid.

Moieties C(O)-R"" in the above general structure (XIV) preferably are derived from fatty acids. Preferred fatty acids to be present as esters in general structure (XIV) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a gluconic acid ester. Especially, the kinetic regulator is an ester of gluconic acid with a polyhydric alcohol. Further preferred are mixed esters of gluconic acid and fatty acids with polyhydric alcohols.

According to embodiments, the kinetic regulator is an ester of gluconic acid according to the following general structure (XV) 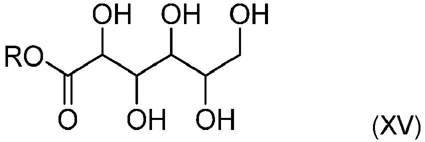 where R is a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms.

Suitable kinetic regulators of the general structure (XV) are butyl gluconate, pentyl gluconate, hexyl gluconate, oleyl gluconate, stearyl gluconate, lauryl gluconate, prenyl gluconate, cyclohexyl gluconate, phenyl gluconate.

According to further embodiments, the kinetic regulator is an ester of gluconic acid with a polyhydric alcohol. Such esters have of the following general structure (XVI): 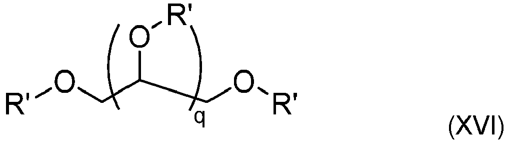 where q is an integer between 0 ― 4, preferably 1 or 2, and
R' independently of one another are H, or C(O)-R"", or a moiety of general structure (XVII), with the provision that at least one of R' is a moiety of general structure (XVII), where R"" is an unbranched C2 ― C30 alkyl chain or an unbranched C2 ― C30 alkenyl chain, wherein the alkenyl chain may comprise between 1 ― 6 double bonds, and where the general structure (XVII) is:

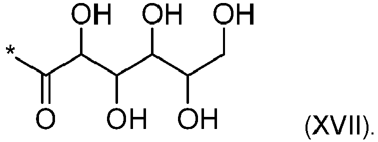

Suitable kinetic regulators of the general structure (XVI) are esters of gluconic acid with ethylene glycol, glycerol, or erythritol.

It is possible within the present context, that the esters of gluconic acid with a polyhydric alcohol comprise additional ester groups formed with acids different from gluconic acid. Such acids especially are acetic acid, propionic acid, and fatty acids. Suitable kinetic regulators of the general structure (XVI) thus also include co-esters of ethylene glycol, glycerol, or erythritol with gluconic acid and at least one of acetic acid, propionic acid, and fatty acids.

According to especially preferred embodiments, the kinetic regulator is selected from monoglycerides of gluconic acid. Monoglycerides of gluconic acid have a chemical structure of the following general formula (XVIII). Accordingly, according to preferred embodiments, the kinetic regulator of the present invention has the general structure (XVIII): 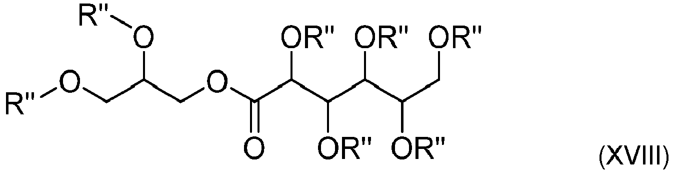 wherein
each R", independently of one another, is H or C(O)-R"", with the provision that at least one R" is not H,
where R"" being an unbranched C2 ― C30 alkyl chain or an unbranched C2 ― C30 alkenyl chain, wherein the alkenyl chain may comprise between 1 ― 6 double bonds.

The kinetic regulator of the present invention can be a monoglyceride of gluconic acid or a mixture of different monoglycerides of gluconic acid.

Moieties C(O)-R"" in the above general structure (XVIII) preferably are derived from fatty acids. Preferred fatty acids to be present as esters in general structure (XVIII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a malic acid ester. Especially, the kinetic regulator is an ester of malic acid with a polyhydric alcohol. Further preferred are mixed esters of malic acid and fatty acids with polyhydric alcohols.

According to embodiments, the kinetic regulator is an ester of malic acid according to the following general structure (IXX) 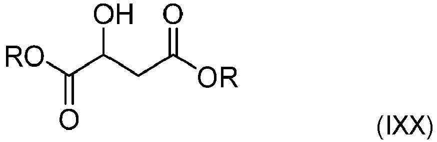 where each R, independently of one another, is H, or a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms, with the provision that at least one of R is not H.

It has been found that kinetic regulators of the general structure (IXX) and with at least one hydrophobic moiety R, are particularly suitable within the present context. Suitable kinetic regulators of the general structure (IXX) are monobutyl malate, dibutyl malate, monopentyl malate, dipentyl malate, monohexyl malate, dihexyl malate, monooleyl malate, dioleyl malate, monostearyl malate, distearyl malate, monolauryl malate, dilauryl malate, monoprenyl malate, diprenyl malate, monocyclohexyl malate, dicyclohexyl malate, monophenyl malate, diphenyl malate.

According to further embodiments, the kinetic regulator is an ester of malic acid with a polyhydric alcohol. Such esters have of the following general structure (XX): 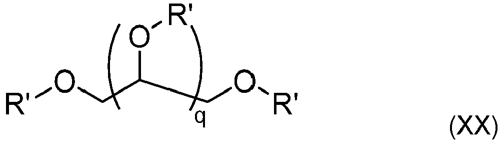 where q is an integer between 0 ― 4, preferably 1 or 2, and
R′ independently of one another are H, or C(O)-R"", or a moiety of general structure (XXIa) or (XXIb), with the provision that at least one of R′ is a moiety of general structure (XXIa) or (XXIb), where R"" is an unbranched C2 ― C30 alkyl chain or an unbranched C2 ― C30 alkenyl chain, wherein the alkenyl chain may comprise between 1 ― 6 double bonds, and where the general structure (XXIa) and (XXIb) are: 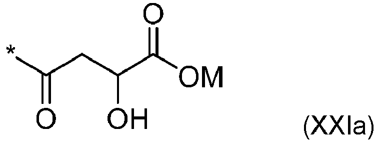 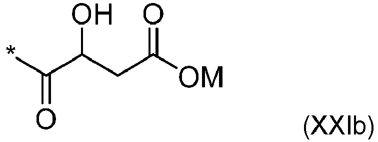 where each M independently of one another is H, or an alkali metal, or alkaline earth metal ion.

Suitable kinetic regulators of the general structure (XX) are esters of malic acid with ethylene glycol, glycerol, or erythritol. Such esters can be mono-, or di-esters of malic acid. Such esters can be monomeric, oligomeric, or polymeric.

It is possible within the present context, that the esters of malic acid with a polyhydric alcohol comprise additional ester groups formed with acids different from malic acid. Such acids especially are acetic acid, propionic acid, and fatty acids. Suitable kinetic regulators of the general structure (XX) thus also include co-esters of ethylene glycol, glycerol, or erythritol with malic acid and at least one of acetic acid, propionic acid, and fatty acids.

According to especially preferred embodiments, the kinetic regulator is selected from mono- and/or diglycerides of malic acid. Mono- and/or diglycerides of malic acid have a chemical structure of the following general formula (XXIIa) or (XXIIb). Accordingly, according to preferred embodiments, the kinetic regulator of the present invention has the general structure (XXIIa) or (XXIIb): 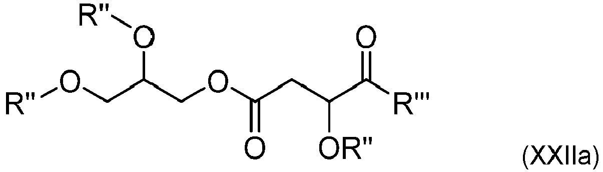 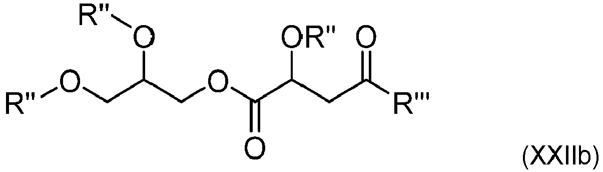 wherein
each R", independently of one another, is H or C(O)-R"", with the provision that at least one R" is not H,
where R"" being an unbranched C2 ― C30 alkyl chain or an unbranched C2 ― C30 alkenyl chain, wherein the alkenyl chain may comprise between 1 ― 6 double bonds, and
each R"' independently of one another is OM with M being H or an alkali metal or alkaline earth metal ion, or a moiety of the following general structure (XXIII), 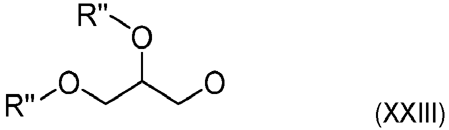 wherein
   each R", independently of one another, is H or C(O)-R"" with R"" being an unbranched C2 ― C30 alkyl chain or an unbranched C2 ― C30 alkenyl chain, wherein the alkenyl chain may comprise between 1 ― 6 double bonds.

The kinetic regulator of the present invention can be a monoglyceride of malic acid or a mixture of different monoglycerides of malic acid. The kinetic regulator of the present invention can be a diglyceride of malic acid or a mixture of different diglycerides of malic acid. The kinetic regulator of the present invention can also be a mixture of one or more monoglycerides and one or more diglycerides of malic acid. It is preferred that the kinetic regulator of the present invention is a mixture of mono- and diglycerides of malic acid.

Moieties C(O)-R"" in the above general structures (XXII) and (XXIII) preferably are derived from fatty acids. Preferred fatty acids to be present as esters in general structures (XXII) and (XXIII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a glycolic acid ester. Especially, the kinetic regulator is an ester of glycolic acid with a polyhydric alcohol. Further preferred are mixed esters of glycolic acid and fatty acids with polyhydric alcohols.

According to embodiments, the kinetic regulator is an ester of glycolic acid according to the following general structure (XXIV) 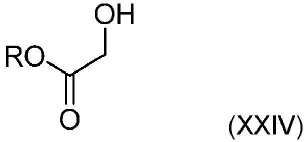 where R is a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms.

Suitable kinetic regulators of the general structure (XXIV) are butyl glycolate, pentyl glycolate, hexyl glycolate, oleyl glycolate, stearyl glycolate, lauryl glycolate, prenyl glycolate, cyclohexyl glycolate, phenyl glycolate.

According to further embodiments, the kinetic regulator is an ester of glycolic acid with a polyhydric alcohol. Such esters have of the following general structure (XXV): 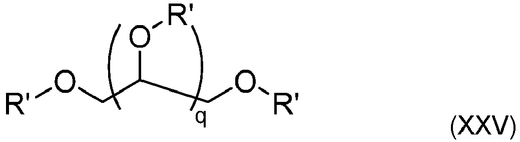 where q is an integer between 0 ― 4, preferably 1 or 2, and
R′ independently of one another are H, or C(O)-R"", or a moiety of general structure (XXVI), with the provision that at least one of R′ is a moiety of general structure (XXVI), where R"" is an unbranched C2 ― C30 alkyl chain or an unbranched C2 - C30 alkenyl chain, wherein the alkenyl chain may comprise between 1 ― 6 double bonds, and where the general structure (XXVI) is:

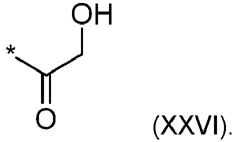

Suitable kinetic regulators of the general structure (XXV) are esters of glycolic acid with ethylene glycol, glycerol, or erythritol.

It is possible within the present context, that the esters of glycolic acid with a polyhydric alcohol comprise additional ester groups formed with acids different from glycolic acid. Such acids especially are acetic acid, propionic acid, and fatty acids. Suitable kinetic regulators of the general structure (XXV) thus also include co-esters of ethylene glycol, glycerol, or erythritol with glycolic acid and at least one of acetic acid, propionic acid, and fatty acids.

According to especially preferred embodiments, the kinetic regulator is selected from monoglycerides of glycolic acid. Monoglycerides of glycolic acid have a chemical structure of the following general formula (XXVII). Accordingly, according to preferred embodiments, the kinetic regulator of the present invention has the general structure (XXVII): 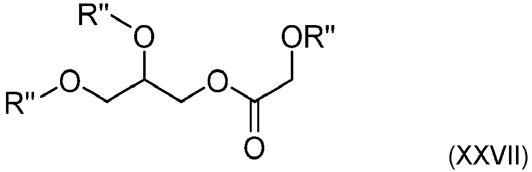 wherein
each R", independently of one another, is H or C(O)-R"", with the provision that at least one R" is not H,
where R"" being an unbranched C2 ― C30 alkyl chain or an unbranched C2 ― C30 alkenyl chain, wherein the alkenyl chain may comprise between 1 ― 6 double bonds.

The kinetic regulator of the present invention can be a monoglyceride of glycolic acid or a mixture of different monoglycerides of glycolic acid.

Moieties C(O)-R"" in the above general structure (XXVII) preferably are derived from fatty acids. Preferred fatty acids to be present as esters in general structure (XXVII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a mandelic acid ester. Especially, the kinetic regulator is an ester of mandelic acid with a polyhydric alcohol. Further preferred are mixed esters of mandelic acid and fatty acids with polyhydric alcohols.

According to embodiments, the kinetic regulator is an ester of mandelic acid according to the following general structure (XXVIII) 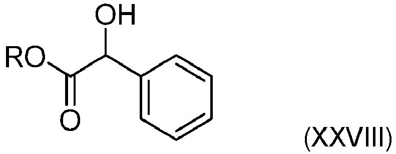 where R is a branched or unbranched C2 ― C30 alkyl chain, or a branched or unbranched C3 ― C30 alkenyl chain, wherein the alkenyl chain may comprise between 1 ― 6 double bonds, or a cyclohexyl group, or an aromatic group with 5 ― 10 C atoms.

Suitable kinetic regulators of the general structure (XXVIII) are butyl mandelate, pentyl mandelate, hexyl mandelate, oleyl mandelate, stearyl mandelate, lauryl mandelate, prenyl mandelate, cyclohexyl mandelate, phenyl mandelate.

According to further embodiments, the kinetic regulator is an ester of mandelic acid with a polyhydric alcohol. Such esters have of the following general structure (XXIX): 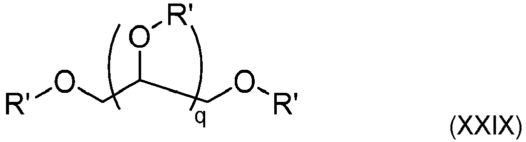 where q is an integer between 0 ― 4, preferably 1 or 2, and
R' independently of one another are H, or C(O)-R"", or a moiety of general structure (XXX), with the provision that at least one of R′ is a moiety of general structure (XXX), where R"" is an unbranched C2 ― C30 alkyl chain or an unbranched C2 ― C30 alkenyl chain, wherein the alkenyl chain may comprise between 1 ― 6 double bonds, and where the general structure (XXX) is:

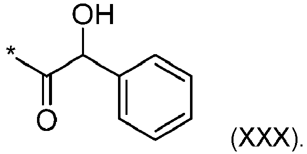

Suitable kinetic regulators of the general structure (XXIX) are esters of mandelic acid with ethylene glycol, glycerol, or erythritol.

It is possible within the present context, that the esters of mandelic acid with a polyhydric alcohol comprise additional ester groups formed with acids different from mandelic acid. Such acids especially are acetic acid, propionic acid, and fatty acids. Suitable kinetic regulators of the general structure (XXIX) thus also include co-esters of ethylene glycol, glycerol, or erythritol with mandelic acid and at least one of acetic acid, propionic acid, and fatty acids.

According to especially preferred embodiments, the kinetic regulator is selected from monoglycerides of mandelic acid. Monoglycerides of mandelic acid have a chemical structure of the following general formula (XXXI). Accordingly, according to preferred embodiments, the kinetic regulator of the present invention has the general structure (XXXI): 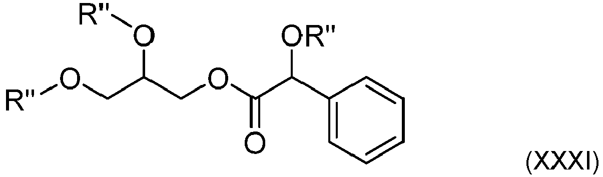 wherein
each R", independently of one another, is H or C(O)-R"", with the provision that at least one R" is not H,
where R"" being an unbranched C2― C30 alkyl chain or an unbranched C2 ― C30 alkenyl chain, wherein the alkenyl chain may comprise between 1 ― 6 double bonds.

The kinetic regulator of the present invention can be a monoglyceride of mandelic acid or a mixture of different monoglycerides of mandelic acid.

Moieties C(O)-R"" in the above general structure (XXXI) preferably are derived from fatty acids. Preferred fatty acids to be present as esters in general structure (XXXI) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, a kinetic regulator of the present invention may also be a mixture of two or more of citric acid esters, tartaric acid esters, lactic acid esters, gluconic acid esters, malic acid esters, glycolic acid esters, and/or mandelic acid esters. A mixture of two or more may also apply to esters of the same acid but which are different chemically.

Kinetic regulators of the present invention preferably are solids. According to embodiments, kinetic regulators of the present invention are solids with a particle size in the range of 0 ― 2000 µm, preferably 250 ― 1000 µm, more preferably 250 ― 500 µm. It has been found that when kinetic regulators of too low particle size are used, the setting time, i.e. the open time of the mineral binder composition may be unduly prolonged. It has also been found that kinetic regulators with particle size higher than 2000 µm may lead to incomplete reaction of the kinetic regulators within the mineral binder composition and thus a lower efficiency.

Particle sizes can be measured by sieve analysis according to standard ASTM C136/C136M. The process separates fine particles from coarser particles by passing the material through a number of sieves of different mesh sizes. The material to be analyzed is vibrated through a series of sequentially decreasing sieves using a single, or combination of horizontal, vertical or rotational motion. As a result, the mass percentage of particles passing through a sieve of a given size is obtained. In the present context, where a range of particle sizes is given, the lower number refers to the sieve mesh size where >90 w%, preferably >99 w% of particles are retained, while the higher number refers to the sieve mesh size where > 90, preferably >99 w% of particles may still pass.

It is thus preferred, that the kinetic regulator present in an admixture of the present invention has a particle size as measured according to ASTM C136/C136M of 0 ― 2000 µm, preferably 250 ― 1000 µm, more preferably 250 ― 500 µm.

Without wishing to be bound by theory, present inventors believe that esters of hydroxy carboxylic acids are slowly hydrolysed in the alkaline environment of a mineral binder mixed with water. Hydroxy carboxylic acids are slowly released and act as retarders for mineral binder hydration, hardening, and/or drying.

An admixture of the present invention optionally also comprises an accelerator. Within the present context, an accelerator refers to an accelerator for the reaction of mineral binders with water. Most preferably, an accelerator is an accelerator for the hydration of cement. Suitable accelerator within the present context are selected from alkali metal or alkaline earth metal hydroxides, nitrates, nitrites, thiocyanates, chlorides, carbonates, bicarbonates, or silicates. Suitable accelerators also are aluminum salts or aluminates. Preferred accelerators are sodium silicate, sodium thiocyanate, sodium carbonate, sodium bicarbonate, calcium hydroxide, calcium chloride, calcium nitrate, calcium nitrite, or aluminum sulfate. According to embodiments, in an admixture of the present invention an accelerator is present, said accelerator being selected from alkali metal or alkaline earth metal hydroxides, nitrates, nitrites, thiocyanates, chlorides, carbonates, bicarbonates, silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

According to embodiments, an admixture of the present invention consists of at least one kinetic regulator selected from citric acid esters, tartaric acid esters, lactic acid esters, gluconic acid esters, malic acid esters, glycolic acid esters, and/or mandelic acid esters.

According to further embodiments, an admixture of the present invention consists of at least one kinetic regulator selected from citric acid esters, tartaric acid esters, lactic acid esters, gluconic acid esters, malic acid esters, glycolic acid esters, and/or mandelic acid esters and a solvent, preferably water.

According to still further embodiments, an admixture of the present invention comprises (in each case relative to the total weight of the admixture) :
a) 1 ― 99 w% of at least one kinetic regulator selected from esters of hydroxy carboxylic acid,
b) 1 ― 99 w% of an accelerator for the hydration of cement, and
c) optionally water.

Preferred esters of hydroxy carboxylic acid are citric acid esters, tartaric acid esters, lactic acid esters, gluconic acid esters, malic acid esters, glycolic acid esters, and/or mandelic acid esters.

It is preferred that an admixture of the present invention is free of water. Free of water means that the water content is below 5 w%, preferably below 1 w%, relative to the total weight of the admixture.

According to embodiments, an admixture of the present invention is in liquid form. A liquid form can be a solution or a suspension of the at least one kinetic regulator and optionally the accelerator in a liquid, preferably in water. According to further embodiments, an admixture of the present invention is in a solid form. A solid form herein refers to a powdery material. The admixture of the present invention may thus be a powder. It is possible, and in certain cases preferred, that an admixture of the present invention which is a solid comprises the at least one kinetic regulator and/or optionally the accelerator adsorbed to a carrier. A suitable carrier is for example silica.

According to embodiments, an admixture of the present invention is a mono-component admixture. That means that all ingredients of the admixture are present in one component. One component usually is one spatial compartment. A mono-component admixture is particularly easy to handle and to dose. According to other embodiments, an admixture of the present invention is a multi-component admixture, preferably a two-component admixture. In a multi-component admixture, the ingredients of the admixture are distributed in different spatial compartments. A two-component admixture of the present invention thus has the ingredients separated in two spatially separated compartments. It can especially be preferable to spatially separate the at least one kinetic regulator from the accelerator and optionally water. This may improve the storage stability of the admixture. A multi-component admixture may have the advantage of increased storage stability and facilitates the individual dosage of single ingredients.

In a further aspect, the present invention also relates to a method of reducing the maximum heat flow of a mineral binder composition, said method comprising a step of adding an admixture as described above to said mineral binder composition.

The mineral binder composition is as described above.

Preferred embodiments as described above shall also apply to such method

In a further aspect the present invention relates to a cementitious composition, especially a cement or a concrete, comprising
a) at least one cement,
b) at least one kinetic regulator selected from esters of hydroxy carboxylic acid, especially citric acid esters, tartaric acid esters, lactic acid esters, gluconic acid esters, malic acid esters, glycolic acid esters, and/or mandelic acid esters,
c) optionally aggregates,
d) optionally further additives, and
e) optionally water.

Preferred esters of hydroxy carboxylic acid are citric acid esters, tartaric acid esters, lactic acid esters, gluconic acid esters, malic acid esters, glycolic acid esters, and/or mandelic acid esters.

According to embodiments, the at least one cement is present in a cementitious composition of the present invention in an amount of 50 ― 600 kg/m³, preferably 100 ― 500 kg/m³, still more preferably 150 ― 400 kg/m³. The kinetic regulator is present in an amount of 0.01 ― 10 w%, preferably 0.05 ― 5 w%, more preferably 0.1 ― 2 w%, still more preferably 0.25 ― 1 w%, in each case relative to the total dry weight of cement. Aggregates are optionally present in an amount of 500 ― 3500 kg/m³, preferably 800 ― 3000 kg/m³. Further additives are optionally present in an amount of 0.1 ― 10 w%, relative to the total dry weight of cement. Water is optionally present in a weight ratio of water to cement of 0.1 ― 0.8, preferably 0.2 ― 0.6, more preferably 0.25 ― 0.5.

According to further embodiments, the at least one cement is present in a cementitious composition of the present invention in an amount of 5 ― 95 w%, preferably 10 ― 60 w%, relative to the total dry weight of the cementitious composition. The kinetic regulator is present in an amount of 0.01 ― 10 w%, preferably 0.05 ― 5 w%, more preferably 0.1 ― 2 w%, still more preferably 0.25 ― 1 w%, in each case relative to the total dry weight of cement. Aggregates are present in an amount of 5 ― 85 w%, preferably 20 ― 80 w% relative to the total dry weight of the cementitious composition. Further additives are optionally present in an amount of 0.1 ― 10 w%, relative to the total dry weight of cement. Water is optionally present in a weight ratio of water to powder of 0.1 ― 0.6, preferably 0.2 ― 0.5, more preferably 0.2 ― 0.4.

According to further embodiments, the at least one cement is present in a cementitious composition of the present invention in an amount of 20 ― 75 w%, preferably 30 ― 50 w% relative to the total dry weight of the cementitious composition. The kinetic regulator is present in an amount of 0.01 ― 10 w%, preferably 0.05 ― 5 w%, more preferably 0.1 ― 2 w%, still more preferably 0.25 ― 1 w%, in each case relative to the total dry weight of cement. Aggregates are present in an amount of 24 ― 75 w%, preferably 30 ― 60 w% relative to the total dry weight of the cementitious composition. Further additives are optionally present in an amount of 0.1 ― 10 w%, relative to the total dry weight of cement. Water is optionally present in a weight ratio of water to powder of 0.1 ― 0.6, preferably 0.2 ― 0.5, more preferably 0.2 ― 0.4

The cementitious composition of the present invention can be a dry cementitious composition. A dry composition means that the amount of water present in such a composition is below 5 w%, preferably below 1 w%, relative to the total weight of the cementitious composition. A dry cementitious composition can be a cement, a dry mortar, or a dry concrete, especially a dry concrete. The cementitious composition of the present invention may also contain water. The cementitious composition may thus also be a wet cementitious composition. A wet cementitious composition can be a mortar, a grout, a screed, an adhesive, a levelling compound, or a concrete, especially a concrete. Preferably, a wet cementitious composition of the present invention is obtained by mixing a dry cementitious composition with water. Such mixing is especially done prior to the application of the cementitious composition. Curing of the cementitious composition will start upon mixing with water. According to embodiments, the amount of water to be added to a dry cementitious composition of the present invention is such that a weight ratio of water to cement of between 0.1 ― 1.0, preferably 0.2 ― 0.6, more preferably 0.25 ― 0. 4 results.

The at least one kinetic regulator selected from citric acid esters, tartaric acid esters, lactic acid esters, gluconic acid esters, malic acid esters, glycolic acid esters, and/or mandelic acid esters in a cementitious composition of the present invention is as described above.

The at least one cement can in particular be Portland cements of type CEM I, CEM II, CEM III, CEM IV, and CEM V as described in standard EN 197-1, Portland cement of type CEM VI as described in standard DIN EN 197-5, calcium aluminate cements as described in standard EN 14647, and/or calcium sulphoaluminate cements. Cements according to other standards, for example Portland cement according to standard ASTM C140-05, or cements according to Chinese, Japanese, Indian or other standards are likewise encompassed. A mixture of two or more of any of these cements is also possible. It is especially preferred that the at least one cement comprises a Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05. It is likewise especially preferred that the at least one cement essentially consists of a Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05. Optionally the Portland cement additionally comprises calcium sulfate with an amount of not more than 20 w%, preferably not more than 10 w%, relative to the total dry weight of cement, of calcium sulfate.

Aggregates can be any aggregate typically used for construction materials. Typical aggregates are for example rock, crushed stone, gravel, sand, especially quartz sand, river sand and/or manufactured sand, slag, micro silica, fly ash, recycled concrete, glass, expanded glass, hollow glass beads, glass ceramics, volcanic rock, pumice, perlite, vermiculite, quarry wastes, raw, fired or fused earth or clay, porcelain, electro-fused or sintered abrasives, firing support, silica xerogels. Aggregates may also be bio-based aggregates such as for example hemp fibers. Aggregates, within the present context, also include fillers such as for example finely ground limestone. Aggregates useful for the present invention can have any shape and size typically encountered for such aggregates. An especially preferred aggregate is sand and/or gravel. Sand and gravel are naturally occurring granular materials composed of finely divided rock or mineral particles. Typically, sand and gravel are composed of siliceous and/or calcareous materials. Sand and gravel are available in various forms and sizes. Suitable sand within the present context may have a particle size of between 0.063 ― 2 mm. Suitable gravel may have a particle size between 2 ― 32 mm. However, other particle sizes are also possible. Examples of suitable sands are quartz sand, limestone sand, river sand or crushed aggregates. Suitable aggregates are for example described in standard EN 12620:2013. Of course, a mixture of aggregates is possible.

Further additives can be any additives common to the mortar and concrete industry. Especially the further additives can be selected from plasticizers, superplasticizers, shrinkage reducers, air entrainers, de-aerating agents, stabilizers, viscosity modifiers, thickeners, water reducers, retarders, accelerators, water resisting agents, fibers, blowing agents, defoamers, redispersible polymer powders, dedusting agents, chromate reducers, pigments, biocides, corrosion inhibitors, and steel passivating agents. Of course, a mixture of two or more of these additives is also possible.

According to preferred embodiments, a cementitious composition of the present invention comprises at least one plasticizer or super plasticizer selected from lignosulphonates, melamine-formaldehyde sulphonates, and polycarboxylate ethers.

According to further preferred embodiments, a cementitious composition of the present invention additionally comprises at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

According to preferred embodiments, the at least one kinetic regulator in a cementitious composition of the present invention is selected from mono-, and/or diglycerides of citric acid. Mono and/or diglycerides of citric acid are as described by the general structure (IV) above. According to other preferred embodiments, the at least one kinetic regulator in a cementitious composition of the present invention is selected from mono-, and/or diglycerides of tartaric acid. According to still other preferred embodiments, the at least one kinetic regulator in a cementitious composition of the present invention is selected from lactic acid esters and/or gluconic acid esters.

According to further preferred embodiments, the kinetic regulator is present in a cementitious composition of the present invention in an amount of 0.01 ― 10 w%, preferably 0.05 ― 5 w%, more preferably 0.1 ― 2 w%, still more preferably 0.25 ― 1 w%, in each case relative to the total dry weight of cement.

A preferred cementitious composition of the present invention thus consists of
a) at least one cement selected from Portland cement, calcium aluminate cement, and/or calcium sulphoaluminate cement, preferably of Portland cement,
b) at least one kinetic regulator selected from mono and/or diglycerides of citric acid of the general structure (IV) in an amount of 0.01 ― 10 w%, preferably 0.05 ― 5 w%, more preferably 0.1 ― 2 w%, still more preferably 0.25 ― 1 w%, relative to the total dry weight of cement, and
c) optionally 0.01 - 5 w%, preferably 0.1 ― 4 w%, more preferably 0.2 ― 3 w%, relative to the total dry weight of cement, of at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

Another preferred cementitious composition of the present invention comprises or essentially consists of
a) 5 ― 95 w%, relative to the total dry weight of the cementitious composition, of at least one cement selected from Portland cement, calcium aluminate cement, and/or calcium sulphoaluminate cement, preferably of Portland cement,
b) at least one kinetic regulator selected from mono and/or diglycerides of citric acid of the general structure (IV) in an amount of 0.01 ― 10 w%, preferably 0.05 ― 5 w%, more preferably 0.1 ― 2 w%, still more preferably 0.25 ― 1 w%, relative to the total dry weight of cement,
c) optionally 5 ― 95 w%, relative to the total dry weight of the cementitious composition, of sand and/or gravel,
d1) optionally 0.01 ― 3 w%, relative to the total dry weight of cement, of at least one plasticizer or superplasticizer,
d2) optionally 0.01 - 5 w%, preferably 0.1 ― 4 w%, more preferably 0.2 ― 3 w%, relative to the total dry weight of cement, of at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate, and
e) optionally water in a weight ratio of water to cement of between 0.1 ― 1.0, preferably 0.2 ― 0.6, more preferably 0.25 ― 0. 4.

According to preferred embodiments, a cementitious composition according to the present invention is characterized in that it has a maximum heat evolution of not more than 3 mW/g and an open time of not more than 60 hours.

Within the present context, the term "retardation" refers to a delay in setting of a mineral binder composition (equivalent to inhibition of the start of hydration of a hydraulic binder, herein measured as an increase in open time) and/or to a delay in curing of a mineral binder composition (herein measured as a decrease in tensile strength after a given time).

A cementitious composition of the present invention can be obtained by intergrinding and/or intermixing a mineral binder composition as described above with an admixture as described above.

In a further aspect the present invention thus relates to a process of manufacturing a cementitious composition, said process comprising a step of
a1) intergrinding a cement or a cement clinker with an admixture as described above, or
a2) intermixing a mineral binder composition with an admixture as described above.

The cementitious composition, the cement, and the mineral binder composition are as described above. Especially, the cementitious composition and the mineral binder composition can be a cement, a dry mortar, a dry concrete, a mortar, a grout, a screed, an adhesive, a levelling compound, or a concrete, especially a dry concrete or a concrete.

Preferably, the cement or cement clinker comprises Portland cement, calcium aluminate cement, and/or calcium sulphoaluminate cement, preferably Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05, especially preferred, the cement or cement clinker essentially consists of Portland cement, calcium aluminate cement, and/or calcium sulphoaluminate cement, preferably Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05. A cement clinker is a raw cement from the cement kiln and which has not yet been ground or blended with any other components. Cement clinker within the present context refers to the same type of cements as described above but before grinding.

Step a1), if present, preferably is conducted during the production of the cement. Preferably an admixture of the present invention is interground with a cement clinker, especially preferred with a Portland cement clinker. This is because, cement clinker is typically ground to a desired fineness during production of cement. Intergrinding of an admixture of the present invention with a cement clinker thus may save process steps. It is, however, also possible to intergrind an admixture of the present invention with a cement as described above, especially with a Portland cement which already has been ground and optionally blended with other components of the cement.

Ways of intergrinding cement clinker or cement with admixtures are known to the skilled person per se and are not particularly limited. It is, for example, possible to do the intergrinding of step a1) in a ball mill or on a vertical roller mill.

Step a2), if present, relates to a mineral binder composition as described above. According to embodiments of the present invention, a mineral binder composition is a concrete or a mortar or a cement, especially a concrete. According to preferred embodiments, the mineral binder composition is a concrete comprising Portland cement.

According to embodiments, a process of manufacturing a cementitious composition of the present invention additionally comprises a step of admixing the composition obtained in step a1 or a2 with at least one of aggregates, further additives, and water.

According to embodiments, a process of manufacturing a cementitious composition of the present invention is characterized in that the admixture is added in an amount so that the amount of the kinetic regulator relative to the cement is between 0.01 ― 10 w%, preferably 0.05 ― 5 w%, more preferably 0.1 ― 2 w%, still more preferably 0.25 ― 1 w%.

According to embodiments, a process of manufacturing a cementitious composition of the present invention and where at least water is additionally admixed, additionally comprises a step of curing the mineral binder composition.

### Brief explanation of figures

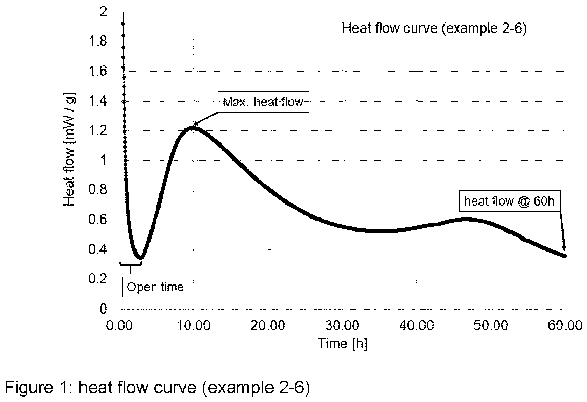

Figure 1 shows the hat flow curve measured for example 2-6. Points in the heat flow curve used to determine the max. heat flow and the heat flow @ 60h are indicated in figure 1. The open time is indicated in figure 1.

It can be seen from figure 1 that the open time is measured from the beginning of mixing until the time where the heat flow curve starts to increase for the first time. The max. heat flow corresponds to the global maximum of the heat flow curve (the initial peak detected within the first 15 min after mixing is disregarded because it is related to the mixing).

### Examples

Heat flow curves were measured in an isothermal process as described in standard ASTM C1702-17. Examples were measured using an instrument i-CAL 8000 from Calmetrix.

The maximum heat flow reported in below tables is the global maximum of the heat flow curve, the heat flow at 60 h after mixing with water is given in below tables, the open time given in below tables is the time where the heat flow curve starts to increase. For the determination of maximum heat flow and open time, the initial peak in heat flow, encountered within the first appr. 15 minutes after mixing, is disregarded because this heat flow is more related to the mixing process.

Tensile strength was measured according to standard DIN EN 196-1:2005-05.

### Example 1

Mortar samples were prepared at 20°C by mixing 1 mass part of cement (CEM III/B 42.5 N), 3 mass parts of CEN standard sand according to EN 196-1, and 0.5 mass parts of water. For the mixing water and cement were added to a mixer bowl. After mixing at low speed for 30 s, sand was added over a period of 30 s. After complete addition of sand, mixing was continued for additional 30 s at higher speed. Then, mixing was stopped for 90 s and the mortar was scraped down the walls of the mixing bowl. Then, mixing was continued at high speed for additional 60 s. The respective retarder of the type indicated in below table 1 were added together with the mixing water in an amount of 0.125 w% relative to the dry weight of cement. The following table 1 gives an overview of the examples 1-1 to 1-5 (all examples 1-1 to 1-5 being comparative examples and not according to the present invention).

Results were measured as indicated above.

**Table 1: examples 1-1 to 1-5**

| Example | Retarder | Max heat flow [mW /g] | Heat flow @ 60h [mW/g] | Open time [h] |
|---|---|---|---|---|
| 1-1 | none | 1.6 | 0.4 | 2 |
| 1-2 | saccharose | 1.55 | 0 | >60 |
| 1-3 | sodium gluconate | 1.48 | 0 | >60 |
| 1-4 | tetrapotassium pyrophosphat | 1.7 | 0.6 | 15 |
| 1-5 | tris(phosphonomethyl)amine | 1.5 | 0 | >60 |

It can be seen from the results in above table 1 that state of the art retarders cannot reduce the maximum heat flow to the desired extent. Also, state of the art retarders, naturally retard the onset of setting (i.e. prolong the open time) significantly.

### Example 2

Mortar samples were prepared at 20°C by mixing 1 mass part of cement (CEM III/B 42.5 N), 3 mass parts of CEN standard sand according to EN 196-1, and 0.5 mass parts of water. For the mixing water and cement were added to a mixer bowl. After mixing at low speed for 30 s, sand was added over a period of 30 s. After complete addition of sand, mixing was continued for additional 30 s at higher speed. Then, mixing was stopped for 90 s and the mortar was scraped down the walls of the mixing bowl. Then, mixing was continued at high speed for additional 60 s. Kinetic regulators and accelerators (where present) were added together with the mixing water. The following tables 2 and 3 give an overview of the examples 2-1 to 2-10 (example 2-1 being a reference not according to the present invention, examples 2-2 to 2-10 being according to the present invention). In tables 2 and 3, the type and amount of kinetic regulator used is given in w% relative to dry cement weight.

Results were measured as indicated above.

**Table 2: examples 2-1 to 2-4**

| Example | Kinetic regulator | Max heat flow [mW /g] | Heat flow @ 60h [mW/g] | Open time [min] | Tensile strength @ 2d [MPa] | Tensile strength @ 7d [MPa] |
|---|---|---|---|---|---|---|
| 2-1 | none | 1.6 | 0.35 | 120 | 3 | 6.9 |
| 2-2 | 1.0 w%, C* 0-250 µm | 1.2 | 0.45 | 360 | 2.0 | 5.9 |
| 2-3 | 1.0 w% C* 250-500 µm | 0.75 | 0.5 | 300 | 1.5 | 5.8 |
| 2-4 | 1.0 w% C*, 500-1000 µm | 0.8 | 0.45 | 280 | 1.1 | 4.8 |

| | | | | | | |
|---|---|---|---|---|---|---|
| C*: citric acid ester of mono- and diglycerides (also known as E472c emulsifier) | | | | | | |

Citric acid ester of mono- and diglycerides of different particle size was used in examples 2-2 to 2-4 (particle size reported in column "kinetic regulator"). It can be seen from the results of table 2 that all kinetic regulators significantly reduced the maximum heat flow. At the same time, retarding effects were still acceptable for practical applications. However, the middle fraction (example 2-3) performed particularly well with a reduction in max. heat flow by 53%. When the citric acid ester of mono- and diglycerides was very fine (example 2-2) longer open time and less reduction of the max. heat flow resulted. It is assumed that the kinetic regulator is consumed rather quickly. On the other hand, when the citric acid ester of mono- and diglycerides was rather coarse (example 2-4) good reduction of max. heat flow but also stronger curing retardation (evident from lower tensile strength values) resulted.

Thus, in the following, all experiments using citric acid ester of mono- and diglycerides were conducted with the middle fraction of particle size 250 ― 500 µm.

The following table 3 shows results of examples 2-5 to 2-10 where citric acid ester of mono- and diglycerides with particle size 250 ― 500 µm was used at different dosages.

**Table 3: examples 2-5 to 2-10**

| Example | Kinetic regulator | Max heat flow [mW /g] | Heat flow @ 60h [mW/g] | Open time [min] | Tensile strength @ 2d [MPa] | Tensile strength @ 7d [MPa] |
|---|---|---|---|---|---|---|
| 2-5 | 0.2 w% C* | 1.4 | 0.3 | 150 | n.m. | n.m. |
| 2-6 | 0.5 w% C* | 1.2 | 0.35 | 170 | n.m. | n.m. |
| 2-7 | 0.9w% C* | 0.9 | 0.45 | 180 | 1.7 | 5.2 |
| 2-8 | 1.2 w% C* | 0.6 | 0.5 | 240 | 1.2 | 4.6 |
| 2-9 | 1.5 w% C* | 0.5 | 0.45 | 360 | 0.6 | 4.2 |
| 2-10 | 2.0 w% C* | 0.4 | 0.38 | 600 | n.m. | n.m. |

| | | | | | | |
|---|---|---|---|---|---|---|
| C*: citric acid ester of mono- and diglycerides (also known as E472c emulsifier) n.m.: not measured | | | | | | |

All examples in table 3 show significantly reduced max. heat flow and at the same time increase in open time which is still acceptable for practical applications. Examples 2-5 to 2-10 show that an increased dosage leads to increase in the reduction of max. heat flow. However, example 2-10 shows that at a dosage of 2.0 w% the retardation starts to become significant.

### Example 3

Examples 3-1 to 3-4 were prepared in the same way as examples 2-2 to 2-10. Citric acid ester of mono- and diglycerides (also known as E472c emulsifier) with particle size 250 ― 500 µm was used as kinetic regulator for all examples. Calcium nitrate was used as accelerator for all examples. The accelerator was added together with the kinetic regulator. The following table 4 shows the dosages of the kinetic regulator and of the accelerator in w% relative to dry cement weight. Examples 3-1 to 3-4 are according to the present invention. Measurements were conducted as explained above. Measured results are also presented in table 4.

**Table 4: examples 3-1 to 3-4**

| Ex. | Kinetic regulator | Acc* | Max heat flow [mW/g] | Heat flow @ 60h [mW/g] | Open time [min] | Tensile strength @ 2d [MPa] | Tensile strength @ 7d [MPa] |
|---|---|---|---|---|---|---|---|
| 3-1 | 0.8 w% | 0.1w% | 0.95 | 0.4 | 200 | 1.8 | 5.9 |
| 3-2 | 1.0 w% | 0.1w% | 0.9 | 0.4 | 120 | 1.5 | 5.0 |
| 3-3 | 1.0 w% | 0.2w% | 0.9 | 0.4 | 180 | 1.7 | 5.5 |
| 3-4 | 1.2 w% | 0.2w% | 0.7 | 0.4 | 220 | 1.5 | 5.4 |

| | | | | | | | |
|---|---|---|---|---|---|---|---|
| *Acc: accelerator (calcium nitrate) | | | | | | | |

As can be seen from the results of table 4, the combined use of kinetic regulator and accelerator leads to a significant reduction of the max. heat flow (cf. examples 3-1 to 3-4 with example 2-1). The additional use of accelerator reduces the open time at a given dosage of kinetic regulator (cf. examples 3-2 and 3-3 with example 2-3 as well as example 3-4 with example 2-8). Also, the tensile strength can be increased by the additional use of accelerator (cf. 2d tensile strength of examples 3-2 and 3-3 with example 2-3 as well as 2d and 7d tensile strength of example 3-4 with 2-8).

### Example 4

For the preparation of examples 4-1 to 4-3 a Portland cement CEM I 42.5 N was dry mixed with the respective kinetic regulator by vigorously shaking until visually homogeneous. The types and amounts of kinetic regulator added were as shown in below table 5. The w% refer to w% of kinetic regulator relative to the total dry weight of cement. Then water was added in an amount to realize a water/cement ratio of 0.35. Mixing was then continued on a Heidolph propeller mixer for 1 min at 1000 rpm. All mixing procedures were done at 23°C and 50% r.h.

Examples 4-2 and 4-3 are according to the present invention. Examples 4-1 is a reference and not according to the present invention.

**Table 5: examples 4-1 to 4-3**

| Example | Kinetic regulator | Max heat flow [mW /g] | Heat flow @ 60h [mW/g] | Open time [min] |
|---|---|---|---|---|
| 4-1 | none | 2.4 | 0.3 | 60 |
| 4-2 | 0.45 w% C* | 2.1 | 0.4 | 240 |
| 4-3 | 0.45 w% E* | 2.1 | n.m. | 180 |

| | | | | |
|---|---|---|---|---|
| n.m.: not measured C*: citric acid ester of mono- and diglycerides (also known as E472c emulsifier) E*: diacetyl tartaric acid ester of mono- and diglyceride | | | | |

It can be seen from the results in table 4 that any of citric acid ester of mono- and diglycerides, diacetyl tartaric acid ester of mono- and diglyceride, reduces the max. heat flow. At the same time retardation is still acceptable for practical applications.

### Example 5

To prepare micro concrete examples 5-1 to 5-7 750 g of cement and 3890 g of aggregate (0-8 mm particle size) were dry mixed. The type and amount of kinetic regulator as indicated in below table 6 was added to the dry mix obtained and intermixed until visually homogeneous. 315 g of water were added and mixing was then continued on a Heidolph propeller mixer for 1 min at 1000 rpm. All mixing procedures were done at 25°C and 50% r.h. The micro concrete thus prepared was cast in prismatic form (12 × 12 × 13.5 cm) into an isolated box made of Styrofoam. An Eltek Squirrel 1000 series data logger with a Ni/CrNi thermocouple (DIN IEC 584 type K; 0.22 mm² diameter, 4.5 Ohm/m resist) was used for core temperature measurement under semi-adiabatic conditions. Therefore, the probe was cast into the micro concrete cube and connected to the data logger unit through a fitting hole in the Styrofoam insulating box. The max concrete core temperature was recorded as well as the times to reach the maximum core temperature and the time for the core temperature to drop to 25°C.

The following table 6 shows examples 5-1 to 5-7 and results measured. Example 5-1 is a reference and not according to the present invention. Examples 5-2 to 5-7 are according to the present invention.

**Table 6: examples 5-1 to 5-7**

| Example | Kinetic regulator | Max concrete core T [°C] | Time to max. concrete core T[h] | Time to reach 25°C in core [h] |
|---|---|---|---|---|
| 5-1 | none | 53 | 12 | 48 |
| 5-2 | 0.5 w% C* | 46 | 34 | 61 |
| | 0.5-1 mm | | | |
| 5-3 | 1 w% C* | 43 | 88 | 72 |
| | 0.5-1 mm | | | |
| 5-4 | 2 w% C* | 39 | 71 | 103 |
| | 0.5-1 mm | | | |
| 5-5 | 1 w% C* | 39 | 35 | 68 |
| | 1-2 mm | | | |
| 5-6 | 1.5 w% C* | 34 | 54 | 96 |
| | 1-2 mm | | | |
| 5-7 | 2 w% C* | 33 | 78 | 114 |
| | 1-2 mm | | | |

| | | | | |
|---|---|---|---|---|
| C*: citric acid ester of mono- and diglycerides (also known as E472c emulsifier) | | | | |

Citric acid ester of mono- and diglycerides of different particle size was used for examples 5-2 to 5-4 and 5-5 to 5-7 respectively (particle size reported in column "kinetic regulator"). Results show that the maximum core temperature of the cast micro concrete was significantly reduced in all cases. A larger particle size of 1 ― 2 mm of the citric acid ester of mono- and diglycerides led to a further reduction as compared to a particle size of only 0.5 ― 1 mm. Retardation (measured as an increase in time needed for the core temperature to reach the maximum and in time needed to cool to 25°C) of all samples was still acceptable for practical application. It was found that higher dosages of kinetic regulator lead to stronger retardation.

## Claims

1. An admixture for mineral binder compositions, said admixture comprising or consisting of
a) at least one kinetic regulator selected from esters of hydroxy carboxylic acid,
b) optionally an accelerator for the hydration of cement, and
c) optionally water.

2. An admixture as claimed in claim 1, **characterized in that** it comprises (in each case relative to the total weight of the admixture) :
a) 1 ― 99 w% of at least one kinetic regulator selected from esters of hydroxy carboxylic acid,
b) 1 ― 99 w% of an accelerator for the hydration of cement, and
c) optionally water.

3. An admixture as claimed in claim 1 or 2, **characterized in that** the at least one kinetic regulator is selected from citric acid esters, tartaric acid esters, lactic acid esters, gluconic acid esters, malic acid esters, glycolic acid esters, and/or mandelic acid esters.

4. An admixture as claimed in any of the preceding claims, **characterized in that** an accelerator is present, said accelerator being selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

5. An admixture as claimed in any of the preceding claims, **characterized in that** the kinetic regulator has a particle size as measured according to ASTM C136/C136M of 0 ― 2000 µm, preferably 0 ― 1000 µm, more preferably 0― 500 µm, even more preferably 250-500 µm .

6. An admixture as claimed in any of the preceding claims, **characterized in that** the kinetic regulator is selected from citric acid esters of the general structure (IV): 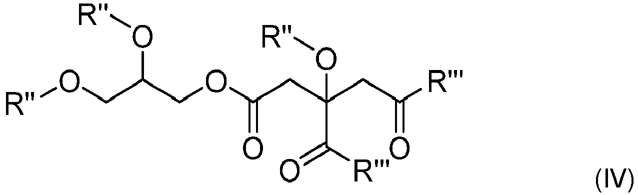 wherein
each R", independently of one another, is H or C(O)-R"", with the provision that at least one R" is not H,
where R"" being an unbranched C2 ― C30 alkyl chain or an unbranched C2-C30 alkenyl chain, wherein the alkenyl chain may comprise between 1 ― 6 double bonds, and
each R"' independently of one another is OM with M being H or an alkali metal or alkaline earth metal ion, or a moiety of the following general structure (V), 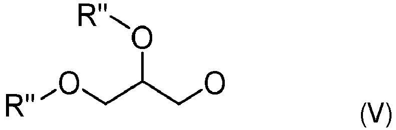 wherein
each R", independently of one another, is H or C(O)-R"" with R"" being an unbranched C2 ― C30 alkyl chain or an unbranched C2 ― C30 alkenyl chain, wherein the alkenyl chain may comprise between 1 ― 6 double bonds.

7. A cementitious composition, especially a cement or a concrete, comprising
a) at least one cement,
b) at least one kinetic regulator selected from esters of hydroxy carboxylic acid, especially citric acid esters, tartaric acid esters, lactic acid esters, gluconic acid esters, malic acid esters, glycolic acid esters, and/or mandelic acid esters,
c) optionally aggregates,
d) optionally further additives, and
e) optionally water.

8. A cementitious composition as claimed in claim 7, **characterized in that** the kinetic regulator is present in an amount of 0.01 ― 10 w%, preferably 0.05 ― 5 w%, more preferably 0.1 ― 2 w%, still more preferably 0.25 ― 1 w%, in each case relative to the total dry weight of cement.

9. A cementitious composition as claimed in any of claims 7 - 8, **characterized in that** the cement comprises or consists of Portland cement, calcium aluminate cement, and/or calcium sulphoaluminate cement, preferably Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05.

10. A cementitious composition as claimed in any of claims 7 ― 9, **characterized in that** it additionally contains an accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

11. A process of manufacturing a cementitious composition as claimed in any of claims 7 - 10, said process comprising a step of
a1) intergrinding a cement or a cement clinker with an admixture as claimed in any of claims 1-6, or
a2) intermixing a mineral binder composition with an admixture as claimed in any of claims 1-6.

12. A process as claimed in claim 11, **characterized in that** the cement or cement clinker comprises Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05, especially preferred, the cement or cement clinker essentially consists of Portland cement of type CEM I, CEM II, CEM III, CEM IV, or CEM V as described in standard EN 197-1, or Portland cement of type CEM VI as described in standard DIN EN 197-5, or Portland cement according to standard ASTM C140-05.

13. A process as claimed in any of claim 11 or 12, **characterized in that** it additionally comprises a step of mixing the composition obtained in step a1 or a2 with at least one of aggregates, further additives, and water.

14. A process as claimed in any of claims 11-13, **characterized in that** the admixture is added in an amount so that the weight ratio of the kinetic regulator relative to the cement is between 0.01 ― 10 w%, preferably 0.05 ― 5 w%, more preferably 0.1 ― 2 w%, still more preferably 0.25 ― 1 w%.

15. A method of reducing the maximum heat flow of a mineral binder composition, said method comprising a step of adding an admixture as claimed in any of claims 1 - 6 to said mineral binder composition.
